# DEMANDE DE BREVET EUROPEEN

(11) **EP 1 729 103 A1**
(43) Date de publication de la demande: **06.12.2006**
(21) Numéro de dépôt: 05104868.4
(22) Date de dépôt: 03.06.2005
(51) Int. Cl.: G01K 3/04

(54) **Procede et dispositif de detection d'une hausse de temperature dans une enceinte froide**

(71) Demandeur: FU-GO, 5020 Malonne (BE)
(72) Inventeur: CREUS, Alexandre, 5537, Haut-Le-Wastia (BE); RIHOUX, Olivier, 5002, Saint-Servais (BE)
(74) Mandataire: Claeys, Pierre

(57) **Abrégé**

Procédé de détection d'une hausse de température, en particulier d'une température de conservation, dans une enceinte froide prévue pour une conservation de produits, comprenant une liquéfaction d'une substance de détection, logée dans une première zone, par une hausse de température et un déplacement de la substance de détection liquéfiée dans une deuxième zone de ladite enceinte permettant une détection de ladite hausse de température; et dispositif pour sa mise en oeuvre.

## Description

La présente invention se rapporte à un procédé de détection d'une hausse de température, en particulier d'une température de conservation, dans une enceinte froide prévue pour une conservation de produits, comprenant:
■ une liquéfaction au moins partielle d'une substance de détection, logée dans une première zone de ladite enceinte, laquelle liquéfaction est provoquée par une hausse de température, en particulier une hausse de température accidentelle, dans ladite enceinte froide, et
■ un déplacement d'un volume de substance de détection liquéfiée dans une deuxième zone de ladite enceinte permettant une détection de ladite hausse de température.

Un tel procédé est connu du brevet suisse n° 625 618. Le procédé divulgué dans ce brevet comprend une liquéfaction d'une partie d'un liquide de détection congelé dans une première zone sous l'effet d'une hausse de température et un déplacement de la partie liquéfiée vers une deuxième zone située sous la première. La température de fusion du liquide est de -10°C. Si l'enceinte de congélation, normalement à -24°C, subit une hausse de température d'au moins 10°C, la substance de détection se liquéfie et s'écoule au fond du récipient. Le procédé peut être réalisé un certain nombre de fois puisqu'il suffit en effet de solidifier le liquide dans la première zone en plaçant cette dernière en bas et de le retourner, c'est-à-dire de placer la première zone en haut pour pouvoir détecter une hausse de température et ainsi de suite, la première zone pouvant servir de deuxième zone et inversement.

Malheureusement, un tel procédé est limité au niveau de la détection. En effet, il est connu qu'une hausse de température pour des produits alimentaires congelés à -24°C qui est de l'ordre de 2 à 6°C altère le goût des aliments sans réel risque d'intoxication tandis qu'une hausse de plus de 6°C peut déjà présenter un risque sérieux d'intoxication alimentaire, surtout si elle a lieu plusieurs fois. En prenant le cas d'une denrée alimentaire transportée, il n'est pas acceptable que le produit subisse lors du transport une première hausse de température qui ne sera pas détectée, ensuite lorsque le produit est placé dans les enceintes de congélation, qu'il subisse une deuxième hausse de température qui ne sera à nouveau pas détectée. Si le produit devait encore en subir une chez le consommateur, le produit devrait carrément être classé impropre à la consommation, et ne serait réellement pas une bonne publicité pour la société produisant ce produit. Or, avec un procédé du type de celui du brevet suisse, ces trois hausses de température consécutives ne pourraient pas être détectées et l'on penserait que le produit a été parfaitement conservé.

En outre, de par la forme en sablier et l'étranglement, le dispositif manque de rapidité à la détection.

D'autres procédés du même type existent, par exemple le procédé du brevet EP 0 606 033. Ce procédé est également décrit au début et il présente les mêmes caractéristiques que le procédé du brevet suisse, mais en plus il comprend une étape de confirmation que le dispositif a été correctement placé dans l'enceinte froide, en l'occurrence un congélateur. En effet, dans le procédé brevet suisse, il n'est pas possible de savoir si l'on a oublié de retourner le sablier pour placer le liquide de détection dans la partie supérieure (le liquide de détection se trouvant à l'état solidifié dans la partie inférieure en cas d'oubli) ou si le contenu du congélateur a subi une hausse de température momentanée, due par exemple à une coupure de courant, qui a eu pour effet de liquéfier la substance de détection. Lorsque le congélateur atteint à nouveau sa température de conservation, le liquide de détection qui se trouve dans la partie inférieure se solidifie à nouveau et il est impossible de savoir ce qui s'est réellement passé. Par la présence dans le brevet EP précité d'une étape de confirmation du placement du liquide de détection dans la zone supérieure, un simple coup d'oeil suffit pour savoir si l'étape de retournement a été réalisée ou s'il s'est produit une décongélation, c'est-à-dire une hausse de température, dans le congélateur.

Malheureusement, le procédé décrit dans le brevet européen ne permet pas réellement de savoir quelle hausse de température le congélateur a subie. Il n'est pas possible de savoir si le contenu du congélateur est à détruire pour risque d'intoxication ou s'il est juste altéré au niveau du goût. L'altération du goût peut ne pas être un critère important pour certains consommateurs. Il est important que ces derniers puissent avoir le choix de consommer quand même ce produit, puisque celui-ci ne présente pas de risque pour la santé.

Il existe d'autres procédés tels que les procédés mis en oeuvre directement par les congélateurs qui comprennent un signalement d'une hausse de température à l'aide d'un témoin lumineux ou d'un signal sonore. Malheureusement en cas d'absence prolongée, ou du moins suffisamment longue pour que la température de conservation soit rétablie, le consommateur ne sera pas averti de la hausse de température subie par le contenu de son congélateur.

En outre, en cas de rupture de courant, la plupart des signaux d'alerte ne se déclenchent qu'à la remise en route du congélateur, et si le consommateur rentre chez lui pendant la rupture d'alimentation électrique, il ne saura pas à quel stade en est la décongélation du contenu de l'enceinte de congélation et il serait risqué de le transférer dans une autre enceinte.

D'autres procédés complexes existent aussi comme des procédés comprenant une étape de mesure au moyen de sondes de températures, une étape d'enregistrement de la température à tout moment et une étape de signalement d'une anomalie pendant un temps relativement long, au moins assez long pour qu'un utilisateur puisse prendre conscience de l'anomalie, mais ces procédés sont coûteux et difficiles à mettre en oeuvre chez des particuliers et ils sont difficiles à utiliser par du personnel non averti. En outre ces dispositifs sont encombrants et difficiles à fabriquer.

Avec les règles, les consignes et les normes d'hygiène et de qualité, plus aucun risque ne peut être pris, que ce soit au niveau de la vente d'un produit présentant des qualités gustatives altérées ou un risque d'intoxication. Dès lors, les fabricants imposent aux détaillants et aux transporteurs de détruire les produits à risque et il y a un réel besoin d'un dispositif simple et peu coûteux pour lequel un simple coup d'oeii suffit pour se rendre compte non seulement d'une hausse de température subie, mais surtout de l'importance de cette hausse de température et ceci sans ambiguïté.

L'invention a pour but de pallier les inconvénients de l'état de la technique en procurant un procédé de détection d'une rupture de la chaîne du froid permettant de détecter de manière substantiellement précise une petite hausse de température, c'est-à-dire qui permet de savoir aisément si le produit est impropre à la consommation pour des raisons de risque d'intoxication ou si le produit risque simplement de présenter des qualités gustatives altérées. Il est en outre avantageux de savoir si l'on a correctement positionné le dispositif dans l'enceinte froide à surveiller. Enfin, de préférence, le dispositif est simple et peu coûteux à fabriquer et à utiliser.

Pour résoudre ce problème, il est prévu suivant l'invention, un procédé tel qu'indiqué au début comprenant en outre une quantification de la hausse de température qui s'est produite dans l'enceinte froide au moyen d'une détermination dudit volume déplacé de substance de détection liquéfiée.

En effet, la substance de détection, lorsqu'elle est placée dans une première zone de l'enceinte froide, est choisie pour être à l'état solide à la température de conservation. La première zone est située au-dessus de la deuxième zone. Lorsque le contenu de l'enceinte à surveiller subit une hausse de température, la substance de détection subira aussi la même hausse de température. Ce qui aura pour effet de liquéfier au moins une partie de la substance de détection. La quantité de substance liquéfiée occupera un certain volume et ce volume aura tendance à s'écouler vers le bas sous l'effet de la gravité et se déplacera dès lors dans la deuxième zone située en dessous de la première zone dans laquelle elle se trouvait à l'état solidifié avant la hausse de température. Le volume de la substance de détection qui s'est déplacé sera ensuite déterminé, et, puisque celui-ci est proportionnel à la hausse de température subie par la substance de détection, il sera possible de quantifier la hausse de température que les produits contenus dans l'enceinte froide ont subie ou que l'enceinte froide a subie.

Avantageusement, lors de ladite détermination, en présence d'un premier volume déplacé de substance de détection liquéfiée inférieur à une limite prédéterminée, une première hausse de température est quantifiée comme correspondant à une hausse à conséquence mineure pour le produit et, en présence d'un deuxième volume déplacé de substance de détection liquéfiée supérieur à ladite limite, une deuxième hausse de température est quantifiée comme correspondant à une hausse de température à conséquence nuisible pour le produit.

Dès lors, le procédé selon l'invention permet de quantifier la hausse de température subie en deux catégories. Si un premier volume de substance de détection s'est liquéfié, c'est-à-dire un volume inférieur à un volume correspondant à la limite prédéterminée, la hausse de température subie est petite. Cela sera le cas par exemple, pour un congélateur dont le contenu est à une température de conservation de -24°C, et dont le premier volume de substance de détection qui s'est liquéfié correspond à une hausse de température de 1 à 6°C. Cette hausse de température est considérée comme une hausse de température altérant les qualités gustatives du produit mais pas comme une hausse présentant un risque d'intoxication pour le consommateur.

Si un deuxième volume de détection s'est liquéfié, c'est-à-dire un volume supérieur à la limite prédéterminée, la hausse de température subie est plus grande. Par exemple, pour un congélateur dont le contenu est à une température de conservation de -24°C, le deuxième volume de substance de détection qui s'est liquéfiée correspondra à une hausse de température supérieure à 6°C. Cette hausse de température est considérée comme une hausse de température présentant un risque d'intoxication pour le consommateur.

Le volume de substance de détection liquéfiée va aussi dépendre bien sûr du volume de cette substance à l'état solide dans la première zone et donc la limite prédéterminée de volume susdite va varier également en fonction de ce paramètre.

Dans une forme de réalisation avantageuse, lorsque la substance de détection subit ladite première hausse de température, elle présente une première viscosité et, lorsque la substance de détection subit la deuxième hausse de température, elle présente une deuxième viscosité, inférieure à la première viscosité.

Dès lors, il est également possible de déterminer la hausse de température au moyen d'une détermination de la viscosité.

Par exemple, selon l'invention, lors dudit déplacement de la première zone à ladite deuxième zone, le procédé comprend un confinement du volume déplacé de substance de détection dans une troisième zone située entre ladite première zone et ladite deuxième zone, lorsque ladite substance de détection présente une viscosité supérieure à ladite deuxième viscosité.

En effet, tant que la substance de détection présente une viscosité supérieure à la deuxième viscosité, cela signifie qu'elle a subit une ou éventuellement plusieurs hausses de température, mais chacune sans risque d'intoxication.

Dès lors, si l'on utilise par exemple des moyens de criblage basés sur la viscosité, il est possible de confiner la substance de détection liquéfiée dans une zone intermédiaire appelée troisième zone, la troisième zone et la deuxième zone étant séparés par les moyens de criblage de viscosité. La substance ayant subi une hausse minime de température présente alors une viscosité trop élevée pour passer à travers le moyen de criblage tandis que la substance ayant subi une hausse de température entraînant des risques pour les aliments à conserver, du fait de sa moindre viscosité, va pouvoir passer au travers du moyen de criblage et atteindre ladite deuxième zone.

En outre, il peut être prévu suivant l'invention que la troisième zone présente également une graduation. Dès lors, il pourrait être possible de connaître soit la durée de la hausse de température inférieure à 6°C, soit de savoir si plusieurs hausses de température inférieures à 6°C sont survenues de manière séquentielle. En effet, tant que la hausse de température ne dépasse pas 6°C, la substance de détection ne présente pas une viscosité suffisamment faible pour passer au travers du crible de viscosité. La quantité de substance de détection présente au-dessus du crible de viscosité sera une indication de la durée totale de la ou des hausses de température.

On peut comprendre que, dans le sens de l'invention, l'expression "détermination du volume déplacé de substance de détection liquéfiée" peut signifier non seulement la mesure de volume de la substance liquéfiée, mais aussi une mesure du déplacement de ce volume dans l'espace (jusqu'à la troisième ou la deuxième zone) ou encore par exemple une mesure de la durée de son déplacement (graduation dans la troisième zone).

Dans une autre forme de réalisation avantageuse, le procédé selon l'invention comprend avant ladite liquéfaction, une solidification de la substance de détection à l'état liquide, et un marquage irréversible du liquide solidifié.

Le marquage irréversible lors de la solidification permet que lors de la liquéfaction au moins partielle de la substance de détection celle-ci soit également marquée. En fait, lors du placement du dispositif dans l'enceinte froide, la substance de détection est à l'état liquide et un marqueur est présent. Par exemple le marqueur sera une poche de colorant. Lorsque la substance de détection atteindra la température de conservation, la poche de marqueur éclatera et lorsque le liquide se liquéfiera ultérieurement, et se déplacera, il en sera de même pour le marqueur. Dès lors, si la substance de détection se trouvant dans la deuxième zone ou dans la troisième zone est marquée, qu'elle soit à l'état liquide ou solide à nouveau, il ne sera pas possible de déclarer, par exemple lors d'un contrôle d'hygiène, que l'on a oublié de placer la substance de détection dans la première zone.

Le procédé selon l'invention est dès lors un procédé infalsifiable qui garantit la détection d'une hausse de température, quelle qu'elle soit.

La présente invention se rapporte aussi à un dispositif pour la mise en oeuvre du procédé selon l'invention. Le dispositif à placer dans une enceinte froide ayant une température de conservation à surveiller selon l'invention comprend:
- un premier compartiment prévu pour contenir, à l'état solide, une substance de détection de rupture de chaîne du froid, et
- un deuxième compartiment situé au-dessous dudit premier compartiment et agencé pour recevoir un volume déplacé de substance de détection à l'état liquide lorsque ladite substance de détection a été liquéfiée à la suite d'une hausse de température.

Ce dispositif est caractérisé en ce qu'il comprend en outre des moyens de quantification de la hausse de température survenue dans l'enceinte froide par détermination dudit volume de substance de détection qui s'est liquéfié.

En effet, en déterminant le volume de substance de détection qui s'est liquéfié et déplacé dans le deuxième compartiment, il sera possible de déterminer quelle hausse de température est effectivement survenue dans l'enceinte à surveiller.

Avantageusement, les moyens de quantification consistent en au moins une graduation dudit deuxième compartiment qui représente une limite prédéterminée.

La présence d'au moins une graduation représentant une limite prédéterminée, par exemple, une limite de volume prédéterminée, il sera possible de déterminer si un premier volume inférieur à la limite de volume prédéterminée s'est liquéfié et déplacé ou si un deuxième volume supérieur à la limite de volume prédéterminée s'est liquéfié et déplacé. On a calibré évidemment la limite prédéterminée comme étant une limite de volume déplacé correspondant à une hausse de température critique. Cela signifie que si le contenu de l'enceinte froide subit une hausse de température supérieure à cette hausse critique de température, il présente un risque d'intoxication lors de sa consommation ou un risque d'altération dangereuse pour le contenu et, s'il subit une hausse de température inférieure à cette hausse de température critique, seules les qualités par exemple gustatives du contenu seront altérées ou légèrement atténuées.

Dans une forme de réalisation particulièrement avantageuse, le dispositif comprend un troisième compartiment situé entre le premier et le deuxième compartiment, les deuxième et troisième compartiments étant séparés par un crible de viscosité.

Dans cette forme de réalisation, les moyens de quantification permettent de quantifier une viscosité, en plus du volume prédéterminé. Le crible de viscosité laisse passer la substance de détection si cette dernière présente une viscosité inférieure à une viscosité prédéterminée qui correspond à une hausse de température critique. Dès lors, si la substance de détection présente une viscosité supérieure à la viscosité prédéterminée, elle ne pourra passer à travers le crible de viscosité et restera confinée au-dessus du crible lors de son déplacement vers le deuxième compartiment. L'espace situé au-dessus du crible de viscosité est appelé le troisième compartiment. Si le volume de substance de détection déplacé se trouve dans le troisième compartiment, il présente ou a présenté à un moment donné une viscosité supérieure à la viscosité prédéterminée et cela signifie que la substance de détection et donc le contenu de l'enceinte froide à surveiller n'ont pas subi de hausse de température supérieure à la hausse de température critique. Par contre, si le volume de substance de détection déplacé se trouve dans le deuxième compartiment, il présente une viscosité inférieure à la viscosité prédéterminée et le volume déplacé est passé au travers du crible. Cela signifie que la substance de détection et donc le contenu de l'enceinte froide à surveiller ont subi une hausse de température supérieure à la hausse de température critique.

De préférence, le premier compartiment est séparé du deuxième compartiment par au moins un étranglement qui empêche la substance de détection solidifiée se trouvant dans la première zone de se déplacer, à l'état solidifié, dans la zone suivante, c'est-à-dire la deuxième ou la troisième selon les cas.

D'autres formes de réalisation du dispositif et du procédé suivant l'invention sont indiquées dans les revendications annexées.

D'autres caractéristiques, détails et avantages de l'invention ressortiront de la description donnée ci-après, à titre non limitatif et en faisant référence aux dessins annexés.

La figure 1 est une vue en perspective d'un dispositif selon l'invention en position de solidification.

La figure 2 est une vue en perspective du dispositif représenté à la figure 1 en position de détection et ayant subi une hausse de température.

La figure 3 est une vue en perspective illustrant une forme de réalisation préférentielle dans laquelle le dispositif en position de détection comprend trois compartiments et a subi une première hausse de température.

La figure 4 est une vue en perspective de la forme de réalisation préférentielle du dispositif illustré à la figure 3 ayant subi une deuxième hausse de température.

La figure 5 est une vue en perspective d'une forme de réalisation préférentielle à compartiments de géométries différentes.

La figure 6 est une vue en perspective de la forme de réalisation illustrée à la figure 5 en une position de solidification.

La figure 7 est une vue en perspective de la forme de réalisation illustrée à la figure 5 en position de détection comprenant en outre les moyens de passage d'une position à une autre et de fixation.

Sur les figures, les éléments identiques ou analogues portent les mêmes références.

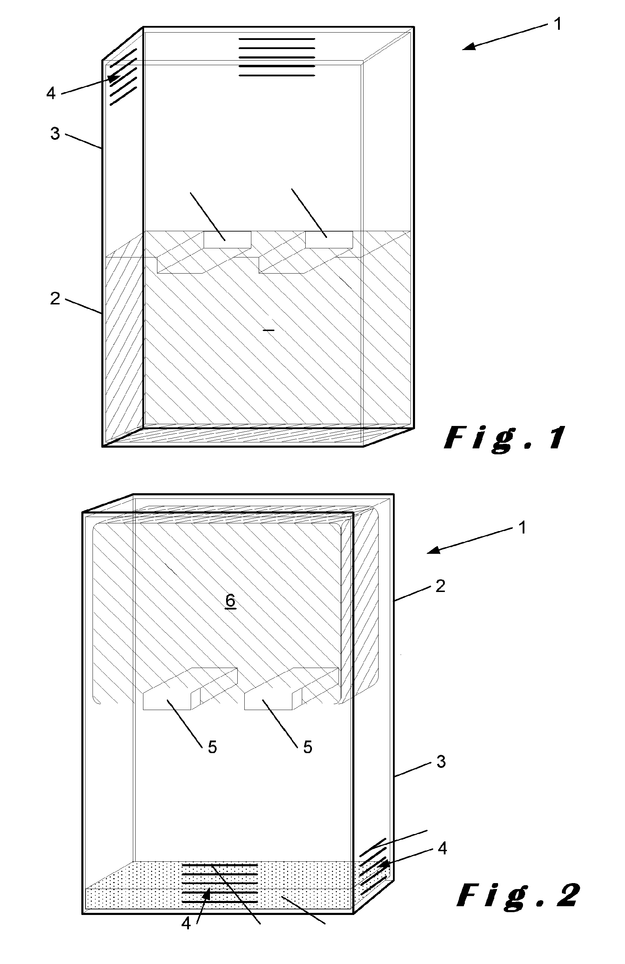

Comme on peut le voir à la figure 1, le dispositif de détection 1 de rupture de chaîne du froid comprend un premier compartiment 2 et un deuxième compartiment 3. Le deuxième compartiment comprend des moyens de quantification 4 qui sont constitués d'au moins une graduation.

Dans la forme de réalisation illustrée, les moyens de quantification sont constitués d'une série de graduations 4, mais il est entendu qu'une seule graduation bien positionnée représentant une limite prédéterminée est suffisante. Le premier compartiment 2 et le deuxième compartiment 3 sont séparés par deux protubérances 5 qui jouent le rôle d'un étranglement pour empêcher le déplacement de la substance de détection solidifiée vers le deuxième compartiment 3 lorsque le dispositif est en position de détection (voir figure 2). Il est clair qu'en l'absence d'une telle protubérance 5, si le bloc tombe en une fois, il n'est pas possible de quantifier aisément la hausse de température puisque la graduation 4 atteinte par le niveau du liquide et du bloc sera une graduation supérieure à celle correspondant à la hausse de température réellement survenue. Ici, les protubérances sont illustrées au nombre de deux, mais une seule suffit. Bien sûr, le dispositif 1 peut en comprendre bien plus.

Egalement, le dispositif 1 pourrait comprendre un premier compartiment 2 conique et le pointe du cône jouerait dès lors le rôle de l'étranglement.

A la figure 1, les protubérances 5 s'étendent sur toute la largeur du dispositif 1, mais elles peuvent être de n'importe quelle taille du moment qu'elles s'étendent légèrement à partir de la paroi sur laquelle elles se trouvent, qui peut être n'importe quelle paroi du dispositif 1, c'est-à-dire sur une paroi frontale, dorsale ou sur une des parois latérales lorsque le dispositif est placé verticalement.

A la figure 1, le dispositif 1 contient une substance de détection 6 qui se trouve dans le premier compartiment 2 et le premier compartiment 2 est vers le bas. Le dispositif 1 est donc en position de solidification et est à placer dans ce sens là dans l'enceinte froide pour sa solidification.

La substance de détection 6 est choisie de façon à être solide à la température de conservation, qui est la température de l'enceinte froide à surveiller, et à se liquéfier sous l'effet d'une hausse de température.

A la figure 2, le dispositif est en position de détection. Il a été retourné afin de permettre à la substance de détection 6 liquéfiée de s'écouler vers le bas si une partie de celle-ci dégèle, c'est-à-dire si le dispositif 1 subit une hausse de température.

Tel qu'illustré ici, le dispositif 1 a subi une hausse de température qui a provoqué le déplacement d'un volume de substance de détection 6' dans le deuxième compartiment 3.

Selon l'invention, il est prévu que, lorsqu'une hausse de température de 1 °C à 6°C survient, un volume de substance de détection 6 se déplace du premier compartiment 2, situé au-dessus du deuxième compartiment 3, vers le deuxième compartiment 3. Ce volume de détection doit être inférieur à une limite prédéterminée pour qu'on puisse considérer que la hausse de température n'a pas atteint le seuil critique.

Sur l'exemple de la figure 2, la dernière graduation 4' est une graduation correspondant à une hausse de température critique, et donc le contenu de l'enceinte froide a subi ici une hausse de température inférieure à la hausse critique puisque le niveau de substance de détection dans le deuxième compartiment 3 est en dessous de la dernière graduation 4'.

Dans le cas d'un congélateur de denrées alimentaires à -24°C, la limite prédéterminée correspond au volume déplacé de substance de détection lorsque l'enceinte est à -18C, c'est-à-dire lorsqu'une hausse de température de 6°C est survenue. En effet, il est connu qu'à partir d'une hausse de température de plus de 6°C, le produit conservé présente un risque d'intoxication alimentaire lors de sa consommation. Pour une hausse de température inférieure à 6°C, c'est le goût du produit conservé qui est altéré. Bien évidemment, le dispositif peut également être placé dans une enceinte d'un laboratoire à -24°C, par exemple contenant des souches de bactéries ou de levure de travail ou des protéines, des marqueurs, des antibiotiques, des vaccins, ou encore d'autres substances. Dans ce cas, en fonction de la hausse de température qui sera critique pour le contenu de l'enceinte, on choisira une substance de détection qui sera liquide à la température critique et solide à la température de conservation.

Le dispositif selon l'invention peut également être placé dans des enceintes plus froides, par exemple des enceintes à -80°C ou -35°C.

Par exemple, il est envisagé suivant l'invention, que le dispositif puisse être placé respectivement dans des enceintes de conservation d'aliment ayant une température de -24°C, -18°C, -12°C et - 6°C qui correspondent à la classification respective de quatre, trois, deux et une étoile.

Pour une enceinte à -80°C, il est connu que la température critique est une température d'environ -60°C. A cette température, les cellules congelées souffrent fortement et les remettre en culture est à éviter. Dès lors, la substance de détection sera prévue pour être à l'état fluide à -60°C et solide à -80°C.

De préférence, la substance de détection est un mélange d'eau et d'un composant choisi parmi un alcool ou un polyol à une concentration comprise dans la plage allant de 99,9 à 0,1% en poids, de préférence de 65% à 15%, ladite substance de détection étant prévue pour être au moins à l'état liquide à la température ambiante et la concentration en alcool ou en polyol étant une fonction de la température à surveiller.

Dans le cas d'une enceinte à -24°C, la quantité d'alcool ou de polyol présente dans la substance de détection sera plus petite que dans le cas d'une enceinte à surveiller à -80°C. Il est aussi clair que la concentration sera aussi une fonction de la hausse de température à détecter et de la viscosité critique à atteindre.

L'alcool ou le polyol sont de préférence à choisir parmi de l'alcool éthylique, de l'alcool isopropylique, de l'alcool butylique, de l'alcool isoamylique, du propylène glycol et du glycérol.

Comme on l'a mentionné ci-avant, la composition de la substance sera une fonction de la température de conservation régnant dans l'enceinte froide et de l'écart de température critique.

Des exemples de substance de détection comprennent, sans toutefois y être limités, un mélange eau-glycérol comprenant environ 49% d'eau et environ 51% de glycérol (T=-24°C, ΔT=6°C), un mélange eau-isopropanol comprenant environ1% d'eau et envrion 99% d'isopropanol (T=-85°C, ΔT= 20°C) et un mélange d'une substance huileuse et du saccharose ou d'un mélange eau-glycérol comprenant 1% d'eau et 99% de glycérol (T=4°C, ΔT=4°C) ou encore une substance comprenant de l'eau, du sucrose, du fructose et du saccharose (T=4°C, ΔT=4°C). Pour une enceinte à -55°C, le mélange sera par exemple contistué de 5% d'eau et de 95% de propylène glycol.

Dans une forme de réalisation préférentielle, le dispositif selon l'invention comprend en outre, dans le premier compartiment, une poche contenant du colorant, ladite poche contenant du colorant étant prévue pour éclater lors de la solidification de la substance de détection et le colorant est prévu pour se mélanger au moins partiellement avec la substance de détection lorsque celle-ci est à l'état liquide. La poche de colorant peut être sphérique (une bille) ou de toute autre forme.

Dès lors, lorsque la substance de détection subit une hausse de température, la substance de détection déplacée est colorée de manière irréversible et il n'est pas possible de cacher qu'il y a eu une hausse de température qui s'est produite dans l'enceinte froide à surveiller, même si elle est solidifiée à nouveau suite à un rétablissement de la température de conservation. L'homme de métier reconnaîtra que le colorant peut être contenu dans une poche, de préférence légèrement souple, qui peut être fixée dans le premier compartiment ou se trouver en suspension ou en solution dans la substance de détection. Le dispositif est donc par sa coloration infalsifiable.

Comme colorant, on peut utiliser tout colorant connu, approprié et par exemple de la fluorescéine, de l'éosine, de la rhodamine, de la quinoléine, du méthyl orange, du bleu de méthylène, de l'alizarine.

La poche de colorant est prévue pour y confiner le colorant pour éviter qu'il se mélange avec la substance de détection à la température ambiante à laquelle il est prévu de conserver le dispositif 1. On peut envisager d'utiliser une poche de matière plastique ou de polymère très peu extensible ou tout type de matériau non soluble dans la substance de détection. Lorsque le dispositif selon l'invention est placé dans l'enceinte froide en vue de sa solidification, il est prévu que la substance de détection exerce une pression sur la matière de la poche et que cette pression provoque la rupture de la poche de colorant . La rupture peut également être provoquée par une solidification du colorant. La rupture de la poche provoque alors la propagation du colorant dans la substance de détection.

Avantageusement, la poche ou bille sera complètement remplie, par exemple de colorant ou d'un mélange air colorant, afin de favoriser son éclatement lors de la pression exercée par la substance de détection solidifiée. En outre, il est envisageable de prévoir que la poche ou la bille se rompe par une déchirure réalisée par des cristaux de substance solidifiée que ce soit de colorant ou de substance de détection 6 ou par les deux phénomènes.

Le colorant contenu par la bille sera de préférence à un état peu compressible, mais il est envisagé selon l'invention qu'il soit à l'état gazeux, liquide ou solide. Dans tous les cas, il sera de préférence liquide à la température critique, mais il peut également être solide pour former une suspension plutôt qu'un mélange.

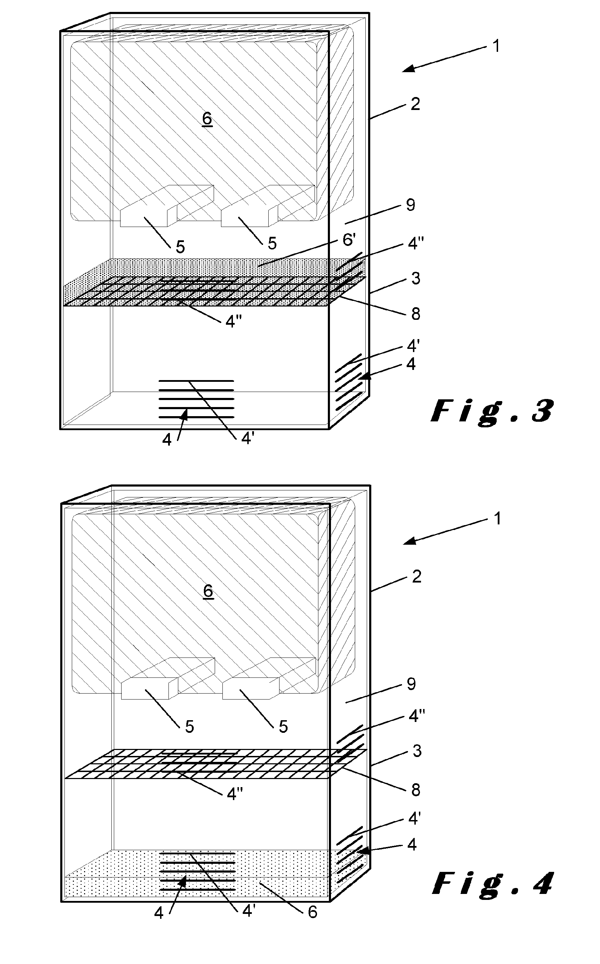

Les figures 3 et 4 illustrent une forme de réalisation préférentielle du dispositif selon l'invention. Dans cette forme de réalisation, le dispositif 1 comprend un crible de viscosité 8.

Le crible de viscosité laisse passer la substance de détection si cette dernière présente une viscosité inférieure à une limite de viscosité prédéterminée qui correspond à une hausse de température critique. Dans le cas d'une enceinte froide à -24°C, la hausse critique de température est comme mentionné plus haut de 6°C. A cette hausse de température de 6°C correspond une viscosité de la substance de détection 6 qui est la viscosité prédéterminée, c'est-à-dire la viscosité de la substance de détection à -18°C. Dès lors, si la substance de détection présente une viscosité supérieure à la limite de viscosité prédéterminée, elle ne pourra passer à travers le crible de viscosité. C'est la situation illustrée à la figure 3. La substance de détection restera confinée au dessus du crible lors de son déplacement vers le deuxième compartiment. L'espace situé au dessus du crible de viscosité est appelé le troisième compartiment 9. Si le volume de substance de détection 6 déplacé se trouve dans le troisième compartiment 9, il présente une viscosité supérieure à la viscosité prédéterminée et cela signifie que la substance de détection et donc le contenu de l'enceinte froide à surveiller n'ont pas subit de hausse de température supérieure à la hausse de température critique de 6°C. Dès lors le contenu présente des qualités légèrement altérées, mais pas dangereuses. En outre, le troisième compartiment 9 peut comprendre une série de graduation 4" permettant de quantifier la durée de la hausse de température non critique ou la durée totale des hausses de températures consécutives non critiques.

Par contre, comme illustré à la figure 4, si un volume de substance de détection 6 déplacé se trouve dans le deuxième compartiment 3, cela signifie qu'il a présenté une viscosité inférieure à la viscosité prédéterminée et le volume déplacé de substance de détection 6 est passé au travers du crible 8. La substance de détection 6 et donc le contenu de l'enceinte froide à surveiller ont donc subit une hausse de température supérieure à la hausse de température critique. Dès lors le contenu de l'enceinte présente un danger, par exemple lors de la consommation ou de l'utilisation.

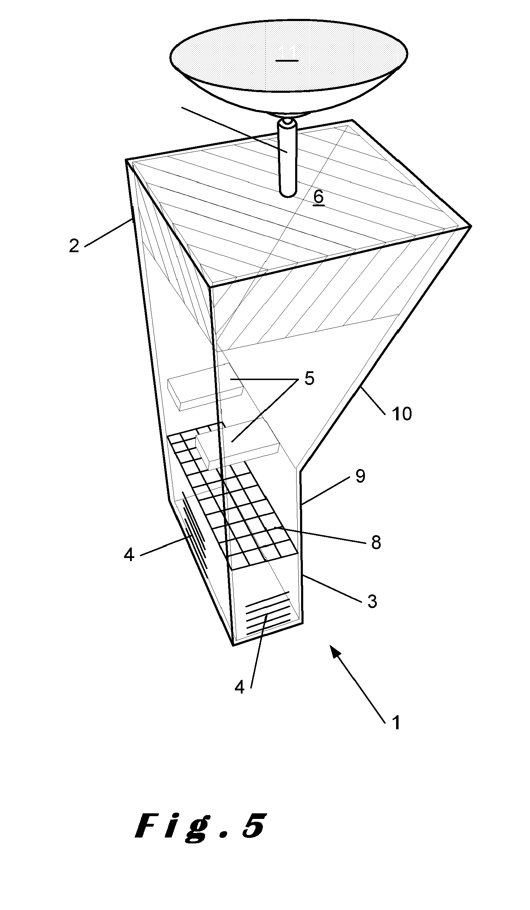

Comme on peut le voir à la figure 5 qui représente le dispositif 1 en position de détection lorsque celui-ci a été placé dans l'enceinte froide en position de solidification verticale, il est également prévu selon l'invention que le dispositif 1 comprenne un premier compartiment 2 qui présente une géométrie différente du deuxième compartiment 3. Ceci permet que le consommateur puisse réellement savoir s'il a oublié de retourner le dispositif 1 en position de détection si la substance de détection 6 se trouve dans le deuxième compartiment 3. En effet, lorsque le dispositif est placé en position de solidification, le premier compartiment 2 est en bas. Lorsque la substance 6 de détection est solidifiée, il est prévu de retourner le dispositif en position de détection, c'est-à-dire de placer le premier compartiment 2 vers le haut.

Si les deux compartiments 2 et 3 sont de géométrie identique, il n'est pas possible lorsque la substance de détection 6 se trouve à l'état solidifié dans le deuxième compartiment 3 de savoir si le dispositif 1 a été retourné en position de détection, s'il a subi une hausse de température ayant déplacé la substance de détection 6 dans le deuxième compartiment 3 et si la substance de détection 6 a été a nouveau solidifiée parce que la température est redevenue normale ou si l'on a simplement oublié de retourner le dispositif 1 en position de détection.

Par contre, si les deux compartiments 2 et 3 sont de géométrie différente, que la substance de détection 6 se trouve à l'état solidifié dans le compartiment du bas et que celui-ci a la géométrie correspondant au premier compartiment 2, alors le dispositif n'a pas été retourné. Si le compartiment du bas présente la géométrie du deuxième compartiment 3, alors une hausse de température s'est produite.

Il est aussi prévu selon l'invention qu'au lieu de géométrie différente, les deux compartiments 2 et 3 soient différenciés par des moyens d'identification comme des lettres, des chiffres ou des couleurs ou encore par un symbole, un logo.

Avantageusement, comme on peut le voir à la figure 5 une des parois 10 du premier compartiment 2 présente une pente qui favorise le déplacement vers le deuxième compartiment de la substance de détection 6. En outre, le dispositif 1 selon l'invention comprend des moyens de fixation constitués d'une ventouse 11 permettant de placer le dispositif dans l'enceinte froide et de remplacer le dispositif 1 lorsque celui-ci a subit une hausse de température

Dès lors, par détermination du volume déplacé, dans les formes de réalisation des figures 1 et 2, on peut entendre bien sûr une mesure de la valeur de volume. Toutefois, comme on peut le voir sur les autres figures, on peut entendre par détermination du volume déplacé, une détermination spatiale de l'endroit où le volume s'est déplacé (compartiment 3 ou 9), l'endroit correspondant à une hausse de température particulière ou encore une détermination de la durée pendant laquelle un volume de substance de détection a été liquéfié de manière non critique (graduation 4" sur la figure 3).

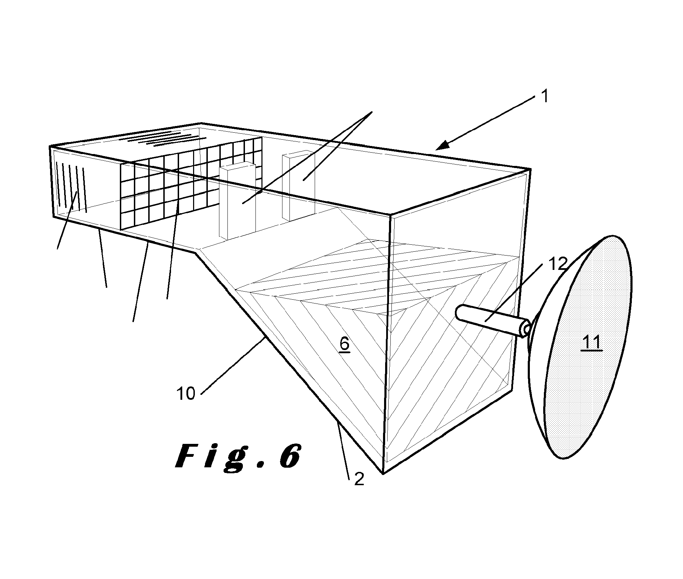

La figure 6 est une forme de réalisation du dispositif selon l'invention qui comprend également une ventouse 11. Dans la forme de réalisation illustrée, la ventouse permet aisément une solidification de la substance de détection 6 en position de détection qui est dans cette alternative, une position horizontale, tel qu'illustrée.

Dans cette alternative, l'oubli en position de solidification est encore plus aisément détectable.

Le dispositif 1 est relié à la ventouse 11 par un bras articulé 12 permettant de disposer facilement le dispositif 1 en position de détection, c'est-à-dire en position verticale avec le premier compartiment 2 vers le bas et ensuite de le remettre en position de solidification, dans ce cas, en position horizontale.

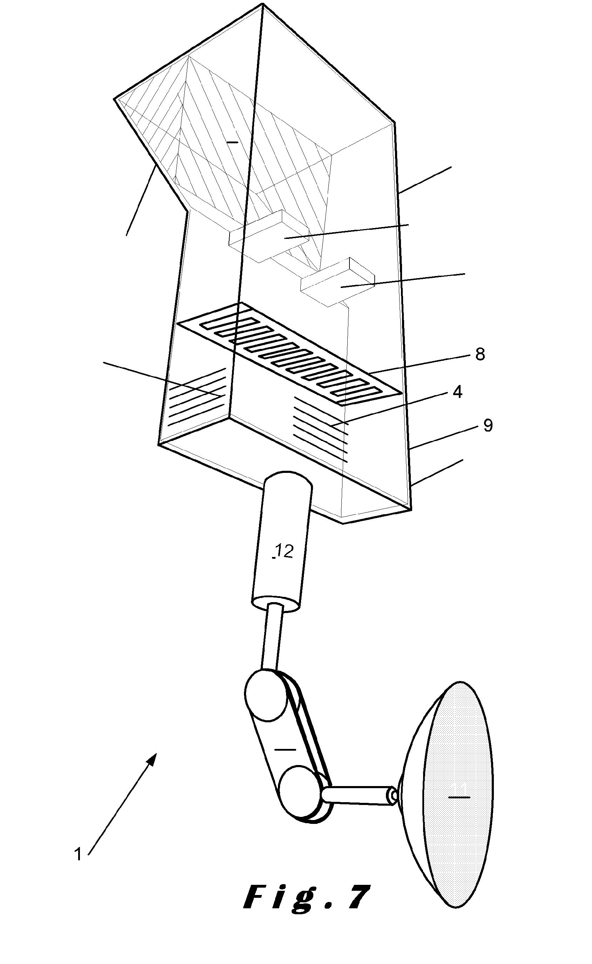

A la figure 7, une forme de réalisation particulièrement préférentielle est représentée. Le dispositif 1 selon l'invention est en position de détection. Le dispositif comprend un bras 12 relié à une charnière crantée 13 qui elle est reliée à la ventouse pour son accrochage à une des parois de l'enceinte froide. La charnière crantée 13 permet de faire pivoter le dispositif 1 de la position de solidification horizontale à la position de détection verticale et inversement, tout en le bloquant dans une de ces deux positions, afin d'éviter qu'il se retourne sous l'effet de son propre poids. La charnière crantée peut également être prévue pour faire passer le dispositif de sa position verticale de solidification à sa position verticale inversée de détection. Dans ce cas, elle bloquera également le dispositif dans ces deux positions.

Il est bien entendu que la présente invention n'est en aucune façon limitée aux formes de réalisation décrites ci-dessus et que bien des modifications peuvent y être apportées sans sortir du cadre des revendications annexées. Par exemple, il peut être également prévu que le dispositif selon l'invention comprenne un évent pour permettre une entrée d'air ou une sortie d'air qui facilite le déplacement de la substance de détection d'un compartiment à l'autre, ceci toujours dans le but d'offrir le meilleur seuil de détection possible avec un dispositif aussi simple. Cela permettrait d'éviter, en présence d'une poche d'air dans le deuxième compartiment ou dans le troisième compartiment, un freinage ou une obstruction au déplacement de la substance de détection.

## Revendications

1. Procédé de détection d'une hausse de température, en particulier d'une température de conservation, dans une enceinte froide prévue pour une conservation de produits, comprenant:
■ une liquéfaction au moins partielle d'une substance de détection, logée dans une première zone de ladite enceinte, laquelle liquéfaction est provoquée par une hausse de température, en particulier une hausse de température accidentelle, dans ladite enceinte froide, et
■ un déplacement d'un volume de substance de détection liquéfiée dans une deuxième zone de ladite enceinte permettant une détection de ladite hausse de température,
**caractérisé en ce qu'**il comprend en outre une quantification de la hausse de température qui s'est produite dans l'enceinte froide au moyen d'une détermination dudit volume déplacé de substance de détection liquéfiée.

2. Procédé selon la revendication 1, dans lequel, lors de ladite détermination, en présence d'un premier volume déplacé de substance de détection liquéfiée inférieur à une limite prédéterminée, une première hausse de température est quantifiée comme correspondant à une hausse à conséquence mineure pour le produit et, en présence d'un deuxième volume déplacé de substance de détection liquéfiée supérieur à ladite limite, une deuxième hausse de température est quantifiée comme correspondant à une hausse de température à conséquence nuisible pour le produit.

3. Procédé selon la revendication 1 ou la revendication 2, dans lequel, lorsque la substance de détection subit ladite première hausse de température, elle présente une première viscosité et lorsque la substance de détection subit la deuxième hausse de température, elle présente une deuxième viscosité, inférieure à la première viscosité.

4. Procédé selon la revendication 3, comprenant en outre, lors dudit déplacement de la première zone vers ladite deuxième zone, un confinement du volume déplacé de substance de détection dans une troisième zone située entre ladite première zone et ladite deuxième zone, lorsque ladite substance de détection présente une viscosité supérieure à ladite deuxième viscosité.

5. Procédé selon l'une quelconque des revendications précédentes, comprenant en outre, avant ladite liquéfaction, une solidification de la substance de détection à l'état liquide, et un marquage irréversible du liquide solidifié.

6. Dispositif de détection d'une hausse de température (1) pour la mise en oeuvre du procédé selon l'une des revendications 1 à 5, à placer dans une enceinte froide ayant une température de conservation à surveiller, comprenant:
- un premier compartiment (2) prévu pour contenir, à l'état solide, une substance de détection (6) de rupture de chaîne du froid, et
- un deuxième compartiment (3) situé au-dessous dudit premier compartiment et agencé pour recevoir un volume déplacé de substance de détection (6') à l'état liquide lorsque ladite substance de détection (6) a été liquéfiée à la suite d'une hausse de température,
**caractérisé en ce qu'**il comprend en outre des moyens de quantification de la hausse de température survenue dans l'enceinte froide par détermination dudit volume déplacé de substance de détection (6) liquéfiée.

7. Dispositif (1) selon la revendication 6, dans lequel les moyens de quantification consistent en au moins une graduation (4) dudit deuxième compartiment qui représente une limite prédéterminée (4').

8. Dispositif (1) selon la revendication 6 ou la revendication 7, comprenant en outre un troisième compartiment (9) situé entre le premier (2) et le deuxième compartiment (3), les deuxième (3) et troisième compartiments (9) étant séparés par un crible de viscosité (8).

9. Dispositif (1) selon l'une quelconque des revendications 6 à 8, comprenant en outre, dans le premier compartiment (2), une poche contenant du colorant, ladite poche contenant du colorant étant prévue pour éclater lors d'une solidification de la substance de détection (6) et le colorant étant prévu pour se mélanger au moins partiellement avec la substance de détection (6) lorsque celle-ci est à l'état liquide.

10. Dispositif (1) selon l'une quelconque des revendications 6 à 9, dans lequel le premier compartiment (2) est séparé du deuxième compartiment (3) par au moins un étranglement (5) qui empêche la substance de détection (6) solidifiée se trouvant dans la première zone de se déplacer, à l'état solide, dans la zone suivante.

11. Dispositif (1) selon l'une quelconque des revendications 6 à 10, présentant une position de détection dans laquelle le premier compartiment (2) est au-dessus du deuxième compartiment (3) et une position de solidification différente de la position de détection, et dans lequel des moyens de passage (11,12) sont prévus pour faire passer le dispositif de la position de détection à la position de solidification et vice versa.

12. Dispositif (1) selon l'une quelconque des revendications 6 à 11, dans lequel chaque compartiment présente au moins une paroi munie de moyens d'identification unique.

13. Dispositif (1) selon l'une quelconque des revendications 6 à 12, dans lequel le premier compartiment comprend au moins une paroi (10) en une pente par rapport à la verticale pour faciliter ledit déplacement dudit volume de substance de détection (6).

14. Dispositif (1) selon l'une quelconque des revendications 6 à 13, dans lequel le premier compartiment (2) présente une géométrie différente du deuxième compartiment (3).
